# EUROPEAN PATENT SPECIFICATION

(11) **EP 1 431 480 B1**
(45) Date of publication and mention of the grant of the patent: **11.07.2007**
(21) Application number: 03257018.6
(22) Date of filing: 06.11.2003
(51) Int. Cl.: E05B 47/02, E05B 15/10

(54) **Electromechanical apparatus**
Elektromechanische Vorrichtung
Appareil électromécanique

(30) Priority: 18.12.2002 US 323550
(43) Date of publication of application: 23.06.2004
(73) Proprietor: Hewlett-Packard Development Company, L.P., Houston, Texas 77070 (US)
(72) Inventor: Reasoner, Kelly J., Fort Collins CO 80526 (US); Proehl, Kraig A., Loveland CO 80537 (US)
(74) Representative: Jehan, Robert

(56) References cited:
- EP-A- 1 239 471
- EP-A- 1 251 504

## Description

The present invention relates to electromechanical locking apparatus. Data storage systems are used to store large volumes of information. As the quantity of information requiring storage continues to increase at unprecedented rates, predicting future storage needs and managing storage infrastructure costs are difficult problems. Accordingly, data storage systems use various techniques to regularly scale up capacity, throughput, and availability of data while reducing system downtime.

Some data storage systems store a plurality of data cartridges in slots within one or more drawers. Such data storage systems include media storage systems or autochangers to automatically change data cartridges in a cartridge reader in response to commands from a controller, enabling access to multiple data cartridges without having to manually position each cartridge in a reader. An autochanger may include one or more different types of cartridge-receiving devices capable of holding cartridges of different sizes and form factors. Such a data storage system is known from EP 1 251 504 A which corresponds to the preamble of claim 1.

These data storage systems include one or more storage racks or magazines arranged in drawers, rows, or other configurations that supply storage locations for the data cartridges. The data storage system commonly includes one or more cartridge read/write devices to access and store data on the cartridges. Although various operational modes are possible, systems commonly have the read/write device in a fixed location and use a moveable cartridge picker assembly to transport data cartridges between storage racks or magazines and the cartridge read/write devices. The cartridge picker can have a plunge mechanism that engages a data cartridge held within the rack or magazine and withdraws the data cartridge. The data storage system also can include a picker positioner that moves the cartridge picker assembly along the rack for transporting the cartridges between the read/write devices and the racks.

Data storage systems can have a controller, such as a host computer system, central processing unit (CPU), microcontroller, microprocessor, state machine, or other type of processor that manages data access and storage. The controller commonly controls functions of the read/write device and other operational elements of a data storage system.

For example, during operation the controller can issue a request for data contained on a particular data cartridge. A control system associated with the data storage system can actuate the picker positioner to move the picker assembly along the cartridge storage racks until positioned adjacent the selected cartridge. The control system then actuates the plunge mechanism to move the data cartridge from the storage rack to the picker assembly, and moves the picker assembly to a cartridge read/write device. Once properly positioned adjacent the read/write device, the plunge mechanism may insert the cartridge into the read/write device for reading or writing of data. When the operation is complete, the control system can actuate the plunge mechanism to remove the cartridge from the read/write device and return the cartridge to the appropriate location in the storage rack.

Some data storage systems may be configured as scaleable, modular units in which multiple autochanger modules, each having one or more read/write devices for example, can be connected to incrementally expand the total system storage capacity. In some configurations, multiple autochanger modules can be interconnected in a vertical stack. In a particular example, multiple autochanger modules may use a single picker assembly that can move vertically between the autochanger modules as well as horizontally within a single autochanger module. In this manner, the picker assembly may access a data cartridge from any autochanger module and access data from the cartridge from any read/write device in the stack of autochanger modules. Usage of a stack of autochanger modules increases total storage and the total number of cartridge read/write devices that can be simultaneously accessed.

In comparison to multiple individual autochangers connected over a network, a stacked autochanger configuration reduces cost since a multiple-module storage device can be made with a single picker mechanism and a single housing. Similarly, a controller can perform all management functions by addressing a single device rather than multiple devices, enabling all read/write devices in the stack access to any data cartridge from any level.

Various components in a data storage system have electromechanical locking devices for securing against unauthorized access and physical damage. For example, a data storage system may include electromechanical locks to lock one or more drawers in place within a chassis or storage cabinet. Some systems include electromechanical locks to lock a data cartridge in place within a slot. Some systems include electromechanical locks to secure a picker assembly in place in an autochanger module. .

Some problems are that an electromechanical lock can be inoperative or damaged, and the inoperative character can be difficult to diagnose and detect. An actuator such as a solenoid or motor may not be connected or become disconnected, or the actuator or actuator circuitry can fail. Also service personnel can unplug and inadvertently fail to reconnect the actuator. The electromechanical locks are typically difficult to access so that operation cannot be easily verified without human intervention. An operator or user typically has no way to determine whether the actuator is correctly installed or correctly operating.

The present invention seeks to provide improved electromechanical locking apparatus.

According to an aspect of the present invention there is provided electromechanical locking apparatus as specified in claim 1.

A method of operating a locking mechanism comprises sensing presence of a moveable member in a vicinity of a fixed structure and actuating a locking member in response to the moveable member sensed presence. The method further comprises engaging via the actuated locking member the moveable member with respect to the fixed structure and providing a configuration of the locking member so that the moveable member shifts position with respect to the fixed structure as the locking member is engaged. The method also comprises detecting the moveable member position shift.

In accordance with an embodiment, the electromechanical locking apparatus comprises an actuator, for example a motor or solenoid, to advance a plunger that locks a device. In some examples, the plunger can lock an insertion member into place. The electromechanical locking apparatus further comprises a sensor to detect and verify that the insertion member is locked in place. The plunger has an undulation, wave, curve, bend, or camber that functions as a sensor test apparatus so that, as the plunger is inserted into an aperture in the insertion member, the insertion member is moved with respect to the sensor. The plunger moves laterally to activate, then deactivate, and finally reactivate a signal from the sensor as the plunger is inserted. The electromechanical locking apparatus further can include a controller that detects signals from the sensor including monitoring, and in some cases timing, the sequence of activation, deactivation, and reactivation. If any portion of the electromechanical locking apparatus fails in the field, the controller can diagnose the error and generate an alert signal.

Embodiments of the present invention are described below, by way of example only, with reference to the accompanying drawings, in which:
FIGURES 1A, 1B, and 1D are schematic three-dimensional cut-away pictorial diagrams that illustrate an example of a media drawer lock assembly. FIGURE 1C is a two-dimensional diagram that shows examples of configurations of a plunger that can be used with the media drawer lock assembly.
FIGURE 2 is a three-dimensional partial-view pictorial diagram showing an example of positioning of the media drawer lock assembly in a chassis or housing of a media storage module.
FIGURES 3A, 3B, 3C, and 3D are cross-sectional pictorial diagrams that show an example of an arrangement of the media drawer lock assembly as a plunger is deployed.
FIGURE 4 is a flow chart that illustrates an embodiment for controlling a locking mechanism and simultaneously testing components of the locking mechanism.
FIGURE 5 is a schematic three-dimensional pictorial diagram showing an example of a media storage module that can be used in a media storage library system.
FIGURE 6 is a pictorial diagram showing a frontal view of a front panel display that is suitable for usage in a media storage library system.
FIGURE 7 is a pictorial diagram showing a frontal view of a status bar that can be shown on various screens.
FIGURE 8 is a three-dimensional pictorial diagram that shows an example of a multiple-module media storage library system.

What is disclosed are embodiments of apparatus and method that facilitate automatic self-testing and diagnosis without operator interaction.

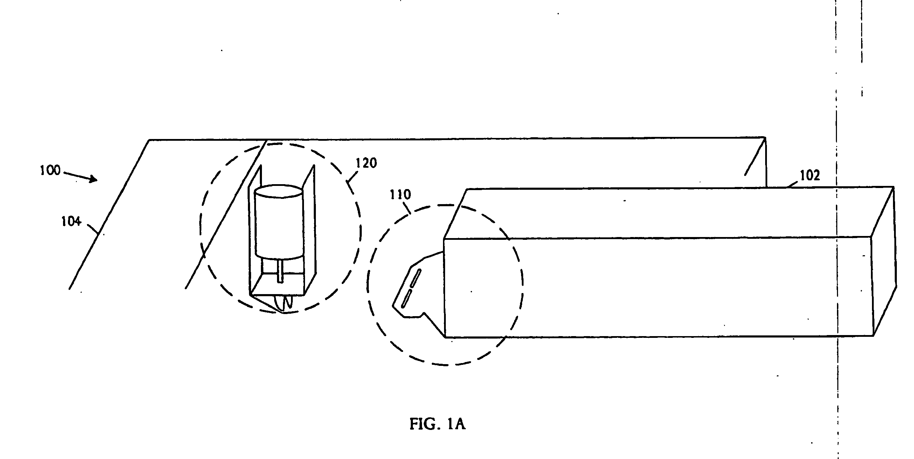

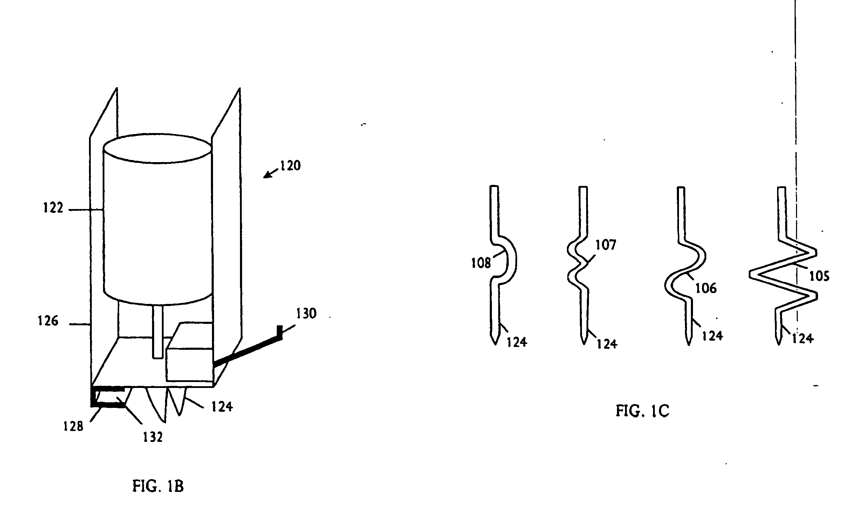

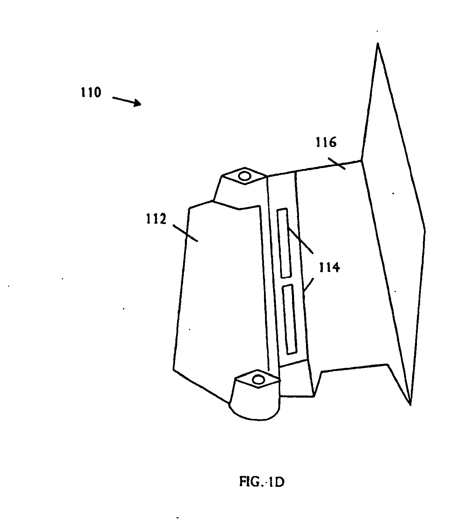

Referring to **FIGUREs 1A, 1B,** and **1D,** schematic three-dimensional cut-away pictorial diagrams illustrate an example of a media drawer lock assembly **100.** The illustrative media drawer lock assembly **100** shown in **FIGURE 1A** comprises a media drawer attachment segment **110** and a housing attachment segment **120.** The media drawer attachment segment **110** comprises a plunger insertion member **112** with an aperture **114,** and a drawer attachment member **116** that firmly affixes the plunger insertion member **112** to a media drawer **102**. The housing attachment segment **120** comprises a plunger drive element **122** with a plunger **124**, a plunger drive attachment member **126** that firmly affixes the plunger drive element **122** to a housing **104.** The housing attachment segment **120** also comprises a sensing arm **130** and a sensor **128** that couple to the plunger drive attachment member **126.**

The sensing arm **130** senses when the moveable media drawer **102** is reaching a closed position in the fixed cabinet, for example by detecting contact with the plunger insertion member **112** as the plunger insertion member **112** is entering an insertion channel **132.** The sensing arm **130,** typically a mechanical sensor, actuates the plunger drive element **122** to extend the plunger **124.**

When the media drawer **102** is in a lock position, the plunger insertion member **112** is seated to an insertion channel **132** in the plunger drive attachment member **126** and is detectable by the sensor **128.** The sensor **128** is any suitable type of sensor capable of detecting positioning of the plunger insertion member **112** within the insertion channel **132.** One suitable type of sensor **128** is an optical sensor or optical interrupter sensor.

The illustrative media drawer attachment segment **110,** shown in **FIGURE 1D,** is constructed as an extension of the media drawer **102**. For example, the media drawer **102** can be constructed from plastic and the media drawer attachment segment **110** can be molded as a member that extends from a posterior surface of the media drawer **102**. In other embodiments, the media drawer **102** and media drawer attachment segment **110** can be constructed from the same material or different materials. Typical materials that are suitable for the media drawer **102** and the media drawer attachment segment **110** include plastics, metals, or any other suitable solid materials. The illustrative media drawer attachment segment **110** has an aperture **114** in the plunger insertion member **112** that is constructed as apertures in a molded plastic frame. The apertures **114** can be machined or drilled into the plunger insertion member **112** as well as molded for various plastic, metal, or other compositions. The aperture **114** can be a single aperture or multiple apertures, and can have any suitable shape or configuration. The illustrative aperture **114** includes two substantially straight-line holes in a collinear configuration. In other embodiments, one or more holes may be used as the aperture **114** in any suitable shape, size, or configuration.

The illustrative housing attachment segment **120,** illustrated in **FIGURE 1B,** comprises a plunger drive attachment member **126** firmly affixed to the housing **104.** The plunger drive attachment member **126** firmly affixes the plunger drive element **122** that controls and drives motion of the plunger **124**. The plunger drive element **122** is any suitable drive element that is capable of moving and controlling motion of the plunger **124.** In various embodiments, the plunger drive element **122** can be a solenoid, motor, or any other device capable of controllably moving the plunger **124.** Suitable solenoids include C-frame, D-frame, push-pull, tubular, and other solenoids. Typically, a linear solenoid can be used that converts electrical energy into a linear mechanical motion to move the plunger **124** a specified distance. Current flow through a solenoid coil winding creates a magnetic field, producing an attraction between the moveable plunger and a stop. On application of electrical power, the solenoid's plunger and an external load on the plunger accelerate and move toward the solenoid's stop until impact. The plunger rides inside the coil core, typically either a plastic bobbin or a nonmagnetic metallic guide. Removal of power from the solenoid eliminates current flow in the coil and the external load returns to a rest position, aided by a return force such as a return spring, gravity, or the external load.

Referring to **FIGURE 1C,** multiple two-dimensional diagrams show examples of configurations of a plunger that can be used with the media drawer lock assembly. The plunger **124** can take any suitable form, for example a zigzag **105**, a wave **106,** an undulation **107,** a bend **108**, or other forms. The plunger **124** can be constructed from any suitable material for articulating with the aperture **114** in the plunger insertion member **112**. In some embodiments, the plunger **124** can be a rod or multiple rods. In other embodiments such as the illustrative embodiment, the plunger **124** has the form of a fork. Illustratively, the plunger **124** can be a two-pronged fork extending as two substantially collinear blades. The blades can have any suitable geometry, for example extending to pointed ends, a flat surface, or other forms. The plunger **124** can be constructed from any suitable material, for example plastic, metal, or other compositions.

In the illustrative media drawer lock assembly **100,** the plunger **124** includes a wave **106,** curve or bend **108,** undulation **107,** zigzag **105,** or other suitable configuration generally in the anterior-posterior direction. The configuration causes the media drawer **102** and the media drawer attachment segment **110** to move in and out one or more times when the plunger **124** inserts into aperture **114** of the plunger insertion member **112.** The sensor **128** detects the brief displacement, facilitating testing of the media drawer lock assembly **100** including testing of the plunger drive element **122** the sensor **128** while the media drawer **102** is simultaneously locking.

In various embodiments, the shape, geometry, and configuration of the plunger **124** and the aperture **114** in the plunger insertion member **112** can be selected or varied to attain smooth locking and sensing operation. For example, sides of the aperture **114** can be contoured or slanted to assist entry of the plunger **124** into the aperture **114** through the wave, curve, or bend **108** in the plunger **124**.

The electromechanical system tests functionality of the sensor and/or the actuator, while simultaneously locking a mechanism. The electromechanical system tests operation of the actuator, such as a motor or solenoid, without human interaction. The electromechanical system also tests operation of the actuator and the sensor whenever the lock is engaged, not simply a single test during manufacturing test.

The electromechanical system automatically verifies that the actuator is assembled and functions correctly, and that the sensor is assembled and functions correctly, without human interaction. The electromechanical system automatically tests that the electromechanical lock functions correctly at every operation of the actuator to engage the lock.

The electromechanical system uses the sensor and actuator that is already within a locking system to perform test operations with minor modifications.

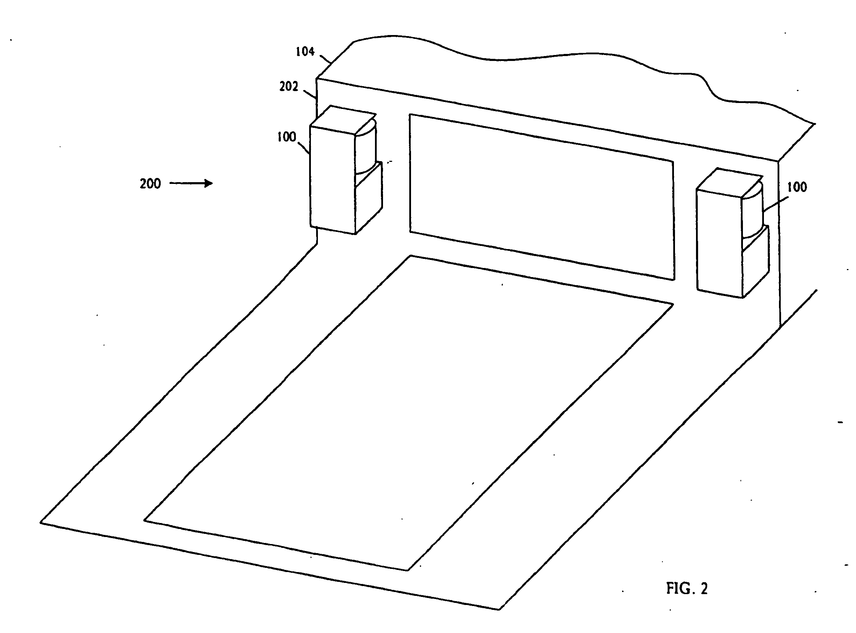

Referring to **FIGURE 2,** a three-dimensional partial-view pictorial diagram shows an example of positioning of the media drawer lock assembly **100** in a chassis or housing **104** of a media storage module **200.** The media storage module **200** includes two media drawer lock assemblies **100** for left and right drawers affixed at a rear panel **202** of the chassis **104.**

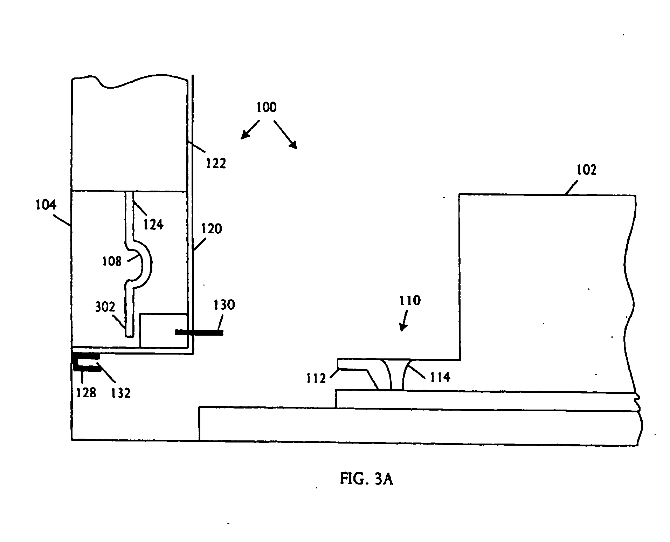

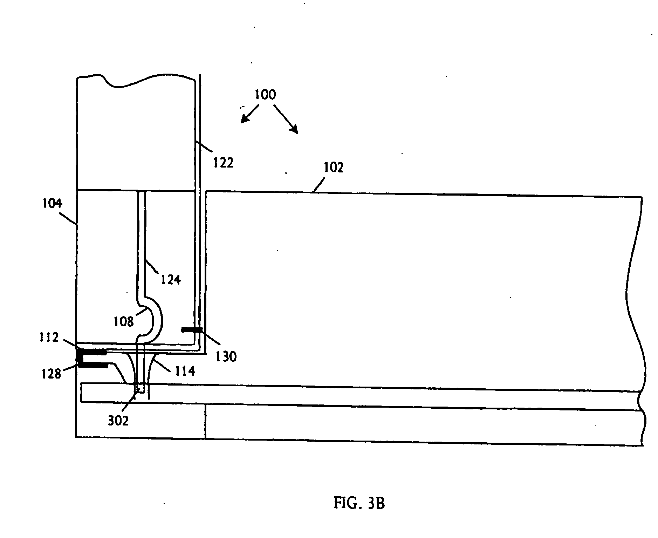

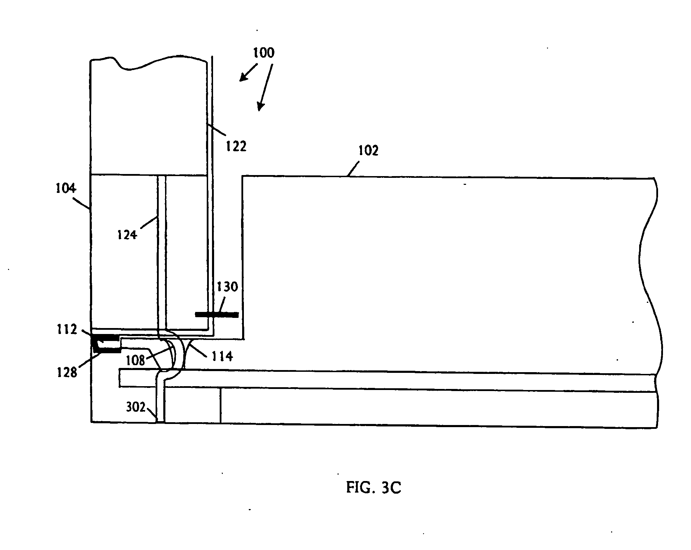

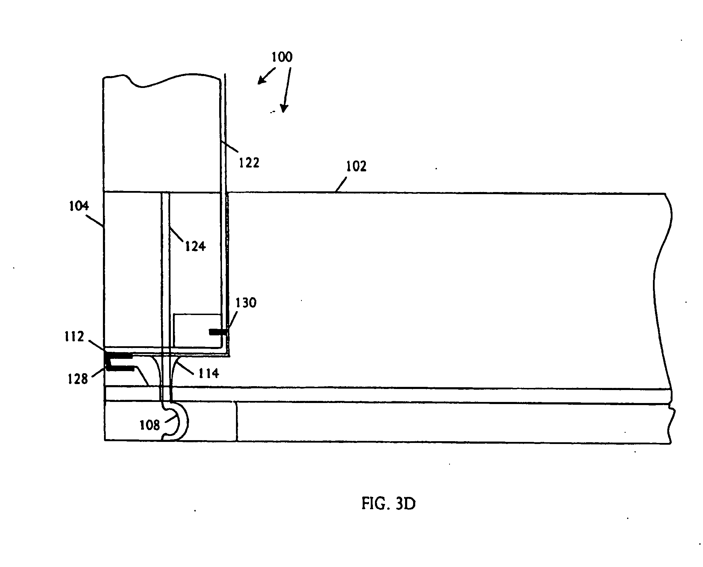

Referring to **FIGURES 3A, 3B, 3C,** and **3D,** a media drawer **102** is pushed into the chassis **104** showing the media drawer lock assembly **100** during deployment of the plunger **124. FIGURE 3A** shows a media storage module **700** with a media drawer **102** partially or fully withdrawn from the chassis **104**. The media drawer attachment segment **110** and plunger insertion member **112** are fully removed from the housing attachment segment **120** and plunger **124.** A user or operator typically actuates a key or button on a front panel display of the storage system to unlock and withdraw the media drawer **102** to the illustrative position. The media drawer **102** can be withdrawn a controlled distance, for example opening to access at least one data cartridge in a mailslot access.

As shown in **FIGURE 3B,** the media drawer **102** is in the process of closing and automatically locking. In some embodiments, the media drawer **102** nears a closed position within the chassis **104** and the sensing arm **130** contacts the plunger insertion member **112,** activating a controller to cause the plunger drive element **122** to begin extending the plunger **124**. In other embodiments, the sensing arm **130** may be omitted and the controller can enter a polling routine that monitors the sensor **128** to determine whether the plunger insertion member **112** in nearing a seated position. In either case, the controller then monitors the sensor **128** to determine positioning of the plunger insertion member **112.**

The controller activates the plunger drive element **122** when the media drawer **102** enters close to a seated position within the chassis **104.** The plunger drive element **122** can have a spring (not shown) that returns the plunger drive element **122** to an open position and release the media drawer **102** upon entry of an open command to the front panel or when power is turned off. When power is removed, all plunger drive elements **122** can be released, opening all media-drawers **102** in a default steady state.

Movement of the media drawer **102** toward a locking position positions the plunger insertion member **112** roughly in the vicinity of a seated position. Actuating the plunger drive element **122** to fire the plunger **124,** forcing the plunger **124** into the aperture **114** rigidly places the media drawer **102** to a stable, centered position within the chassis **104.** Rigid positioning of the media drawer **102** is highly beneficial to enable smooth operation of a robotic assembly that moves media cartridges within the system.

The plunger **124** begins entering the aperture **114,** for example in the manner of entering a funnel arrangement to facilitate firm seating of the plunger insertion member **112** into the insertion channel **130**. The distal portion **302** of the plunger **124** contacts the aperture **114** causing the plunger insertion member **112** to be disposed within the sensor **128.** The sensor **128** detects the plunger insertion member **112** and sends a signal to the controller indicating that the media drawer **102** has entered the close position

Referring to **FIGURE 3C,** the plunger **124** extends further into the aperture **114** to the position of the wave, curve, or bend **108** in the plunger **124,** momentarily pulling the plunger insertion member **112** away from the sensor **128.** The signal from the sensor **128** indicating the momentarily open sensor **128** transfers to the controller.

In **FIGURE 3D**, the plunger **124** is fully deployed into the aperture **114,** beyond the position of the wave, curve, or bend **108** so that the plunger insertion member **112** is pulled back into the sensor **128.** The sensor signal to the controller verifies the locked condition.

The media drawer lock assembly **100** is an electromechanical system that uses an electromechanical lock to secure a media drawer **102,** a door, or other assembly, and a sensor **128** to detect status of the lock. The electromechanical lock has a sensor test apparatus that momentarily activates, then deactivated, then activates the sensor **128** for simultaneously testing of the sensor **128** and the electromechanical lock as the lock is deployed. The media drawer lock assembly **100** further includes a control element that detects and monitors the activation, deactivation, and activation sequence to formulate a test response.

In one example, the sensor test apparatus is implemented as an undulation, wave, curve, bend or camber in a lock plunger **124,** and the control element detects and times the sensor response sequence to determine efficacy of the lock.

The media drawer lock assembly **100** comprises the plunger drive element **122**, an actuator such as a motor or solenoid, to advance a plunger **124** that locks a device such as the media drawer **102**. In some examples, the plunger **124** can lock an insertion member **112** into place. The media drawer lock assembly **100** further comprises a sensor **128** to detect and verify that the insertion member **112** is locked in place. The plunger **124** has an undulation, wave, curve, bend, or camber that functions as a sensor test apparatus so that, as the plunger is inserted into an aperture in the insertion member **112,** the insertion member **112** is moved with respect to the sensor **128.** The plunger **124** moves laterally to activate, then deactivate, and finally reactivate a signal from the sensor **128** as the plunger is inserted. The media drawer lock assembly **100** further can include a controller that detects signals from the sensor **128** including monitoring, and in some cases timing, the sequence of activation, deactivation, and reactivation. If any portion of the media drawer lock assembly **100** fails in the field, the controller can diagnose the error and generate an alert signal.

Accordingly, the media drawer lock assembly **100** tests functionality of the sensor **128** and/or the plunger drive element **122,** while simultaneously locking a mechanism. The media drawer lock assembly **100** tests operation of the plunger drive element **122,** such as an actuator, motor or solenoid, without human interaction. The media drawer lock assembly **100** can also test operation of the plunger drive element **122** and the sensor **128** whenever the lock is engaged, not simply a single test during manufacturing.

The media drawer lock assembly **100** can automatically verify that the plunger drive element **122** is properly assembled and properly functions, and that the sensor **128** is correctly assembled and functions without human interaction. The media drawer lock assembly **100** can automatically test that the electromechanical lock correctly functions at every operation of the plunger drive element **122** to engage the lock.

When the media drawer **102** is closed and locked, the controller reinventories the media drawer **102** to determine any changes in media. For example, a robotic assembly can use imaging technology to locate and view bar codes on the data cartridges and identify media characteristics.

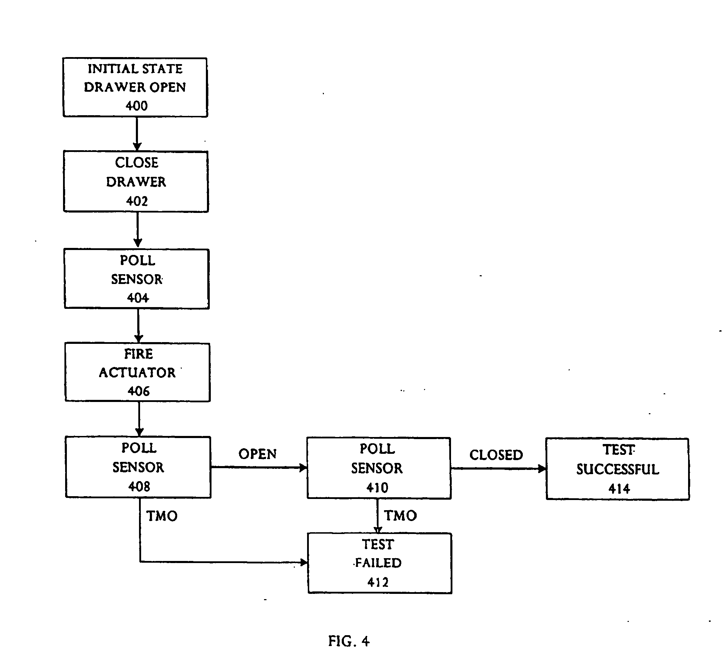

Referring to **FIGURE 4,** a flow chart illustrates an embodiment for controlling a locking mechanism and simultaneously testing components of the locking mechanism. The method, process, or procedure is typically executed by a controller or processor contained within a storage system or disposed external to the storage system but in communication with the system. In one example, a media storage module within a media storage library system may include a library controller that can execute the technique.

In an initial state **400** drawer or door to a storage module is in an open configuration with the plunger drive element **122,** for example a solenoid, in a released state. A user activates the method by closing the drawer or door **402,** for example by physically pressing the drawer or door into a closed position. In other embodiments, a user may close a drawer or door by pressing a button on or near the door, pressing a key on a front panel or possibly entering a command, and the like. The system can poll **404** a sensing mechanism such as the sensor **128** or respond to activation of a sensing mechanism such as the sensing arm **130** to detect drawer closure. The controller responds to closure detection by activating **406** the plunger drive element **122,** for example a solenoid, and entering a polling loop **408** that waits for subsequent detection in change in state of the sensor **128.**

If the sensor changes state, the controller enters a second polling loop **410** to wait for sensor closure. If a timer times out **(TMO)** before the sensor opens, the controller enters an error handling action **412**. The first and second polling loops **408** and **410** time closing, opening, and subsequent closing of the sensor **128** to determine whether the plunger drive element **122** is correctly functioning, and also to detect some types of sensor failure.

The controller enters the error handling action **412** upon timeout of a selected interval, typically on the order of a fraction of a second up to a few seconds, to determine whether a sensor actuates within a reasonable time and, if not, to flag an error condition. The error handling action **412** verifies whether the plunger drive element **122** properly activates and deactivates, and can indicate whether the sensor **128** fails to operate upon drawer or door closure. For example, after initial actuation of the plunger drive element **122,** failure to detect a change in state of the sensor **128** may indicate that the sensor **128** is not properly functioning. The error condition may otherwise indicate that the plunger drive element **122** did not properly activate and an appropriate error code can be displayed on the storage system front panel to assist trouble-shooting.

When an error condition occurs, the controller can attempt one or more subsequent test cycles upon occurrence of a timeout failure to account for transient conditions, such as system jostling or movement.

If the sensor successfully closes in the second polling loop **410,** the controller can set a flag indicating proper operation **414** of the plunger drive element **122** and sensor **128** that permits the system to continue operation, for example permitting robotic or automatic control operations. Robotic or automatic control operations risk system damage to robotic mechanisms if the plunger drive element **122** is not correctly operating. A successful test indicates that the plunger drive element **122** is properly connected, the system is properly locking, and the door is shut and locked.

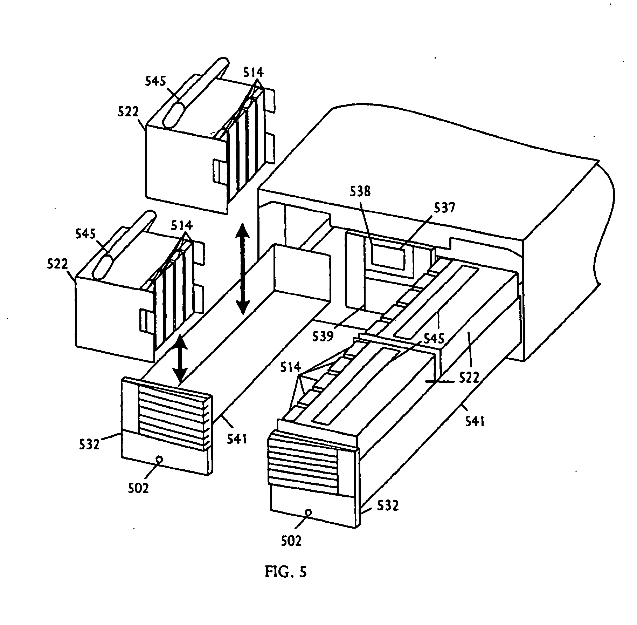

Referring to **FIGURE 5**, in the illustrative media storage library system a user can access data cartridges **514** via magazine access or mailslot access. In either case, the user accesses the data cartridges **514** through a door **532** on a front panel **538.** The illustrative media storage module **500** has two doors **532** on adjacent sides of a window on the front panel **538.** The window may be a display panel window **537** or a viewing window **539**. The cartridge magazines **522** are-held within media drawers **541** on opposite sides of a guide frame that are accessible when the doors **532** are open. The front panel **538** has a user interface that includes soft keys and a front panel light emitting diode (LED). The doors **532** have a lock **502.**

In a magazine access operation, a user actuates buttons on a menu displayed on the display panel window **537** to unlock one or more doors, then draw out the unlocked drawer(s) to access cartridge magazines **522** and data cartridges **514.** In some applications, media drawers **541** may be key-locked so that the user unlocks the media drawer **541.** The user removes a cartridge magazine **522** by lifting vertically with a magazine handle **545,** and removes a data cartridge **514** by lifting from the cartridge magazine **522.** The user may insert the same or another data cartridge **514** back into the cartridge magazine **522.** In some embodiments, the media drawers **541** move in and out of the media storage module **500** under the power of a drawer transport mechanism (not shown) as controlled by buttons on the display panel window **537.** In other embodiments, the drawers can be manually removed and inserted via sliding drawers.

In a mailslot access operation, a user actuates buttons on the menu displayed on the display panel window **537** to show a "mailslot access" screen that displays a message indicating the number of data cartridges **514** in the mailslot and the procedure for opening the appropriate door **532.** Actuation of a "open drawer" button causes the media drawer **541** to open only to the number of storage slots that have been configured for the mailslot. The user may insert, withdraw, or replace data cartridges **514** in the mailslot, then close the media drawer **541.** The media storage library system automatically detects the closure, locks the media drawer **541,** and initiates an inventory check

In normal operation, the doors **532** and media drawers **541** are locked, and a user can access a selected data cartridge **514** either locally from the display panel window **537** or remotely via commands from a controller. The controller may be a local controller **510** connected to or contained within the media storage library system or a remote controller accessing via a network. The picker **516** can access all data cartridges **514** contained within the media storage module **500** and within a media storage library system with multiple media storage modules **500.** If a user desires to remove a data cartridge **514** from a cartridge read/write device **524,** for example for replacement, the user can control the picker **516** to move the cartridge from the cartridge read/write device **524** to a cartridge magazine **522.** For magazine access, the user can move the cartridge to a selected media drawer **541.** For mailslot access, the user moves the cartridge to a magazine and location within the magazine that is configured as the mailslot. When the cartridge is appropriately positioned, the user can access the cartridge by magazine access or mailslot access for removal or replacement.

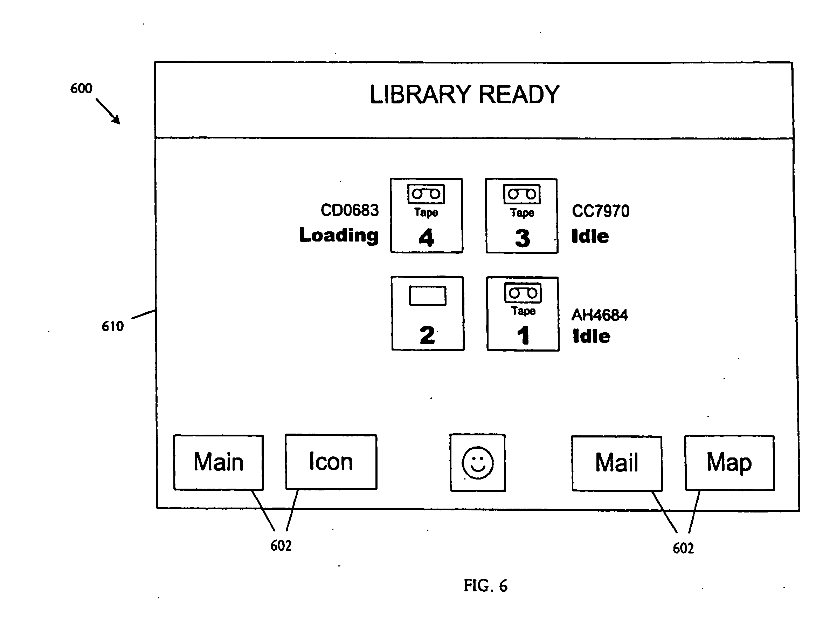

Referring to **FIGURE 6,** a pictorial diagram shows a frontal view of a front panel display **600** that is suitable for usage in a media storage library system. In an illustrative example, the front panel display **600** can be a liquid crystal display with a plurality of soft keys. The front panel display can be used to display status of self-test operations. The front panel display **600** mounts on the front of the media storage library and functions as a user interface that controls library functions. The front panel display **600** displays icons and text showing library, drive, and data cartridge status information. Displayed text prompts and warnings direct user operations while accessing the media storage library system.

The front panel display **600** may have multiple status light-emitting diodes (LEDs) that communicate status and error conditions in real-time. The LEDs can be used to display error information regarding operation of the solenoid and/or sensors.

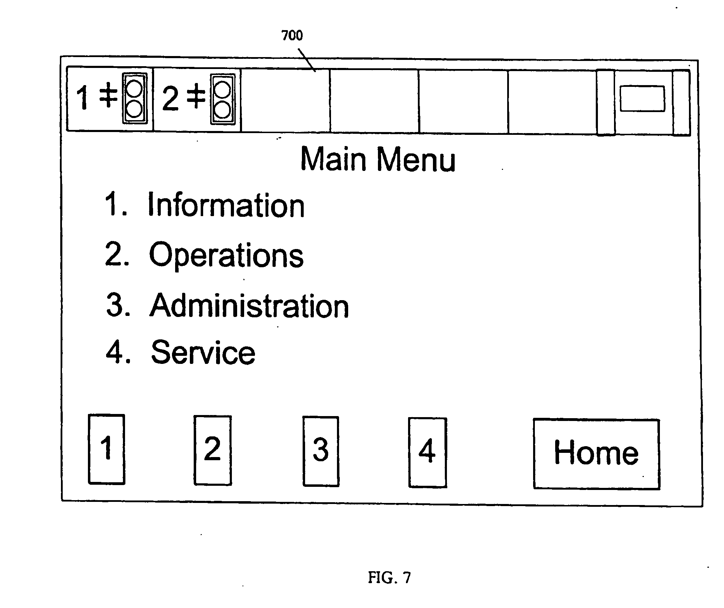

Referring to **FIGURE 7**, a pictorial diagram shows a frontal view of a status bar **700** that can be shown on various screens. In some examples, the status bar **700** can be displayed on all screens except Home and Map screens. The status bar **700** summarizes library and drive status and can reverse color for drive or library errors that have been entered in a media log or hard error log. Drive icons can show results of locking component self-tests. Drive icons can also show conditions such as power-off, offline, failure-offline, needs cleaning, cleaning in progress, empty, loading, write-protected media, online, full and idle, unloading, seeking data, writing data, rewinding for tape media, reading data, erasing and others. Library icons can show conditions such as failed, partially available, and operational. Other icons, assigned as drive icons or library icons, or otherwise configured under another category of icons, can be defined to alert a user to status and conditions of components in a locking system. For example, icons can be configured and displayed to indicate status of sensors and actuators such as solenoids or motors, and to identify the particular device such as drawer, robotic, media slot, and the like,

Error types include soft or recovered errors, partial availability errors, system and media errors, and hard or unrecovered errors. A soft error is recovered or resolved by one or more automatic retries. The soft error log returns a message indicating the absence of soft errors or supplies an error entry or history. An error light on the front panel may display solid green for a soft error.

A partial availability error indicates the library has a condition to be noted but remains operational. The error light on the front panel may display solid amber for a partial availability error. Partial availability conditions include drive conditions such as drive not present, offline, online pending, firmware mismatch, dirty, critical error, and Fibre channel conditions. Other partial availability conditions include magazine and mailslot conditions such as missing or incompatible magazines, open doors, or an open mailslot. Other partial availability conditions are front panel conditions including failure of front panel display power-up and failure to detect the front panel.

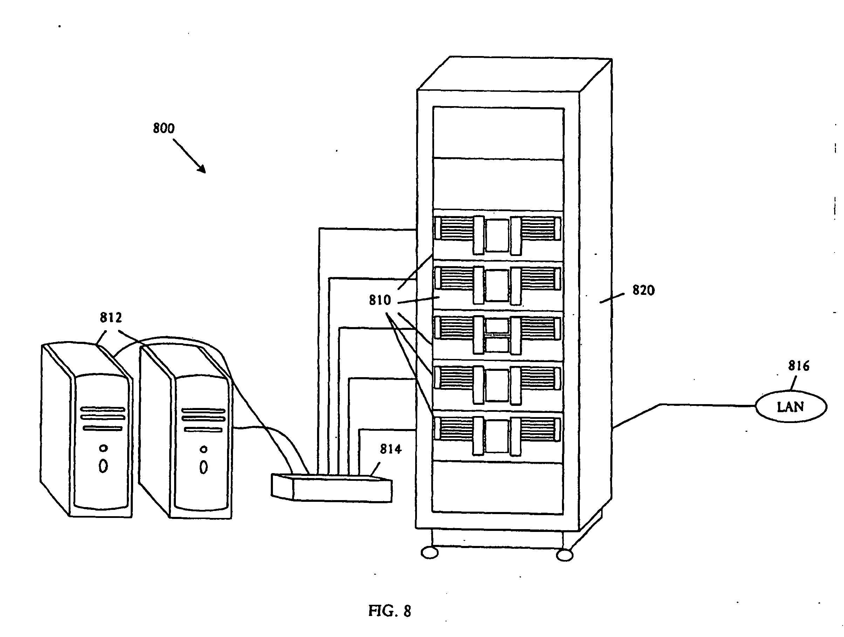

Referring to **FIGURE 8,** a three-dimensional pictorial diagram shows an example of a multiple-module media storage library system **800.** The media storage library system **800** may include processors and controllers interior to a particular storage module, interior to multiple-module system but shared among modules, and external to the system to control functions such as self-test functions. The illustrative media storage library system **800** has a large capacity cabinet **820** that can hold multiple media storage modules **810** in a large capacity media storage library system **800**. The media storage library system **800** comprises, in addition to the cabinet **820** and the multiple media storage modules **810**, one or more host processors **812** that are connected to the cabinet **820** via a hub or switch **814**. The media storage library system **800** may also include a remote management card local area network (LAN) connection **816** for remote access and storage of data. The hub or switch **814** and the LAN connection **816** are connected to the media storage modules **810** in the cabinet **820** by any suitable interface, such as a small computer systems interface (SCSI). A host processor **812** can operate as a system controller or other suitable processor for controlling and managing testing and configuration operations of the media storage library system **800**.

Although the illustrative example describes a system for testing the lock and sensor for locking of a drawer into a cabinet or chassis, the same or similar apparatus and method can be employed to lock other components or devices including but not limited to locking of a slot in a drawer, locking of a robotic component or device to a fixed position in a housing, chassis, or cabinet, or the like.

## Claims

1. An electromechanical locking apparatus (100) including:
an attachment member (124),
an actuator (122) coupled to the attachment member (124) and capable of extending the attachment member;
an insertion member (112) with an aperture (114) for receiving the attachment member (124); and
a sensor (128) capable of detecting position of the insertion member (112), **characterised in that** the attachment member (124) has a configuration (105, 106, 107, 108) that moves the insertion member (112) to deactivate and reactivate the sensor (128) as the aperture (114) receives the attachment member (124).

2. Electromechanical locking apparatus according to claim 1, including;
a controller (510) coupled to the sensor (128) and capable of executing a process that tests operability of the actuator (122) and/or the sensor (128).

3. Electromechanical locking apparatus according to claim 1, including;
a controller (510) coupled to the sensor (128) and capable of monitoring activation and
deactivation of the sensor (128) and generating a test response in response to the monitored activation and deactivation.

4. Electromechanical locking apparatus according to any preceding claim, wherein:
the attachment member (124) is a plunger and the actuator (122) is a solenoid that actuates to extend the plunger into the aperture (114) the insertion member (112).

5. Electromechanical locking apparatus according to any one of claims 1 to 4, wherein:
the attachment member (124) is a plunger that has a curve, bend, or undulation (105, 106, 107, 108) capable of shifting the insertion member (112) with respect to the sensor (128) as the plunger extends into the aperture.

6. Electromechanical locking apparatus according to any preceding claim, wherein the sensor (128) is an optical sensor.

7. Electromechanical locking apparatus according to any preceding claim wherein:
the actuator (122) is a motor or a solenoid capable of advancing a plunger to lock a device.

8. Electromechanical locking apparatus according to any preceding claim, wherein:
the attachment member (124) and the sensor (128) operate in combination to activate, deactivate, and reactivate a signal as the actuator (122) advances the attachment member (124) to lock a device.

9. Electromechanical locking apparatus according to any preceding claim, including:
a storage chassis (104),
at least one storage module installed within the storage chassis, the storage modules including one or more of a group comprising a door (402), a drawer (102), a storage cartridge slot, a robotic engaging assembly, and a robotic assembly.

10. Electromechanical locking apparatus according to any preceding claim, wherein:
the locking apparatus locks a device selected from among the group comprising a door (402), a drawer (102), the storage cartridge slot, the robotic engaging assembly, and the robotic assembly.

## Patentansprüche

1. Eine elektromechanische Verriegelungsvorrichtung (100), die folgende Merkmale umfasst:
ein Befestigungsbauglied (124),
ein Betätigungsglied (122), das mit dem Befestigungsbauglied (124) gekoppelt und in der Lage ist, das Befestigungsbauglied auszufahren;
ein Einfügungsbauglied (112) mit einer Apertur (114) zum Aufnehmen des Befestigungsbauglieds (124); und
einen Sensor (128), der in der Lage ist, die Position des Einfügungsbauglieds (112) zu erfassen, **dadurch gekennzeichnet, dass** das Befestigungsbauglied (124) eine Konfiguration (105, 106, 107, 108) aufweist, die das Einfügungsbauglied (112) bewegt, um den Sensor (128) zu deaktivieren und zu reaktivieren, wenn die Apertur (114) das Befestigungsbauglied (124) aufnimmt.

2. Elektromechanische Verriegelungsvorrichtung gemäß Anspruch 1, die folgendes Merkmal umfasst:
eine Steuerung (510), die mit dem Sensor (128) gekoppelt und in der Lage ist, einen Prozess auszuführen, der die Betriebsbereitschaft des Betätigungsglieds (122) und/oder des Sensors (128) testet.

3. Elektromechanische Verriegelungsvorrichtung gemäß Anspruch 1, die folgendes Merkmal umfasst:
eine Steuerung (510), die mit dem Sensor (128) gekoppelt und in der Lage ist, eine Aktivierung und Deaktivierung des Sensors (128) zu überwachen und ansprechend auf die überwachte Aktivierung und Deaktivierung eine Testantwort zu erzeugen.

4. Elektromechanische Verriegelungsvorrichtung gemäß einem der vorhergehenden Ansprüche, bei der:
das Befestigungsbauglied (124) ein Kolben ist und das Betätigungsglied (122) ein Solenoid ist, das betätigt, um den Kolben in die Apertur (114) in dem Einfügungsbauglied (112) auszufahren.

5. Elektromechanische Verriegelungsvorrichtung gemäß einem der Ansprüche 1 bis 4, bei der:
das Befestigungsbauglied (124) ein Kolben ist, der eine Krümmung, Biegung oder Wellung (105, 106, 107, 108) aufweist, die in der Lage ist, das Einfügungsbauglied (112) bezüglich des Sensors (128) zu verschieben, wenn der Kolben in die Apertur ausgefahren wird.

6. Elektromechanische Verriegelungsvorrichtung gemäß einem der vorhergehenden Ansprüche, bei der der Sensor (128) ein optischer Sensor ist.

7. Elektromechanische Verriegelungsvorrichtung gemäß einem der vorhergehenden Ansprüche, bei der:
das Betätigungsglied (122) ein Motor oder ein Solenoid ist, der beziehungsweise das in der Lage ist, einen Kolben vorzuschieben, um ein Bauelement zu verriegeln.

8. Elektromechanische Verriegelungsvorrichtung gemäß einem der vorhergehenden Ansprüche, bei der:
das Befestigungsbauglied (124) und der Sensor (128) in Kombination arbeiten, um ein Signal zu aktivieren, zu deaktivieren und zu reaktivieren, wenn das Betätigungsglied (122) das Befestigungsglied (124) vorschiebt, um ein Bauelement zu verriegeln.

9. Elektromechanische Verriegelungsvorrichtung gemäß einem der vorhergehenden Ansprüche, die folgende Merkmale umfasst:
ein Speicherungschassis (104),
zumindest ein Speicherungsmodul, das in dem Speicherungschassis installiert ist, wobei die Speicherungsmodule eine(n, s) oder mehrere einer Gruppe umfassen, die eine Tür (402), ein Schubfach (102), einen Speicherungskassettenschlitz, eine Roboter-Ineingriffnah-meanordnung und eine Roboteranordnung umfasst.

10. Elektromechanische Verriegelungsvorrichtung gemäß einem der vorhergehenden Ansprüche, bei der:
die Verriegelungsvorrichtung ein Bauelement verriegelt, das aus der Gruppe ausgewählt ist, die eine Tür (402), ein Schubfach (102), den Speicherungskassettenschlitz, die Roboter-Ineingriffnahmeanordnung und die Roboteranordnung umfasst.

## Revendications

1. Appareil de verrouillage électromécanique (100), comprenant:
> un élément de fixation (124),
> un actionneur (122) couplé à l'élément de fixation (124) et capable d'étendre l'élément de fixation ;
> un élément d'insertion (112) avec une ouverture (114) pour recevoir l'élément de fixation (124); et
> un capteur (128) capable de détecter la position de l'élément d'insertion (112), **caractérisé en ce que** l'élément de fixation (124) a une configuration (105, 106, 107, 108) qui déplace la chambre d'insertion (112) pour désactiver et réactiver le capteur (128) lorsque l'ouverture (114) reçoit l'élément de fixation (124).

2. Appareil de verrouillage électromécanique selon la revendication 1, comprenant :
un contrôleur (510) couplé au capteur (128) et capable de réaliser un procédé qui teste la fonctionnalité de l'actionneur (122) et/ou du capteur (128).

3. Appareil de verrouillage électromécanique selon la revendication 1, comprenant :
un contrôleur (510) couplé au capteur (128) et capable de surveiller l'activation et la désactivation du capteur (128) et de générer une réponse d'essai en réponse à l'activation et la désactivation surveillée.

4. Appareil de verrouillage électromécanique selon l'une quelconque des revendications précédentes, dans lequel :
l'élément de fixation (124) est un piston plongeur et l'actionneur (122) est un solénoïde qui fonctionne pour étendre le piston plongeur dans l'ouverture (114) dans l'élément d'insertion (112).

5. Appareil de verrouillage électromécanique selon l'une quelconque des revendications 1 à 4, dans lequel :
l'élément de fixation (124) est un piston plongeur qui a une courbure, un pli ou une ondulation (105, 106, 107, 108) capable de déplacer l'élément d'insertion (112) par rapport au capteur (128) lorsque le piston s'étend dans l'ouverture.

6. Appareil de verrouillage électromécanique selon l'une quelconque des revendications précédentes dans lequel le capteur (128) est un capteur optique.

7. Appareil de verrouillage électromécanique selon l'une quelconque des revendications précédentes dans lequel :
l'actionneur (122) est un moteur ou un solénoïde capable de faire avancer un piston plongeur pour verrouiller un dispositif.

8. Appareil de verrouillage électromécanique selon l'une quelconque des revendications précédentes, dans lequel:
l'élément de fixation (124) et le capteur (128) fonctionnent en combinaison pour activer, désactiver et réactiver un signal lorsque l'actionneur (122) fait avancer l'élément de fixation (124) pour bloquer un dispositif.

9. Appareil de verrouillage électromécanique selon l'une quelconque des revendications précédentes, comprenant :
un châssis de stockage (104), au moins un module de stockage installé dans le châssis de stockage, les modules de stockage comprenant un ou plusieurs d'un groupe comprenant une porte (402), un tiroir (102), une fente de cartouche de stockage, un ensemble de mise en prise robotique et un ensemble robotique.

10. Appareil de verrouillage électromécanique, selon l'une quelconque des revendications précédentes, dans lequel :
l'appareil de verrouillage verrouille un dispositif choisi dans le groupe comprenant une porte (402), un tiroir (102), une fente de cartouche de stockage, un ensemble de mise en prise robotique et un ensemble robotique.
